(19) Europäisches Patentamt
European Patent Office
Office européen des brevets

(11) Veröffentlichungsnummer: **0 318 798**
**A2**

(12) # EUROPÄISCHE PATENTANMELDUNG

(21) Anmeldenummer: **88119385.8**

(22) Anmeldetag: **22.11.88**

(51) Int. Cl.4: **C08G 63/12 , C08G 63/60 , C09D 5/03 , C08L 67/00 , //(C08L67/00,63:02)**

(30) Priorität: **03.12.87 DE 3740932**

(43) Veröffentlichungstag der Anmeldung:
**07.06.89 Patentblatt 89/23**

(84) Benannte Vertragsstaaten:
**BE CH DE ES FR GB IT LI NL**

(71) Anmelder: **BAYER AG**

**D-5090 Leverkusen 1 Bayerwerk(DE)**

(72) Erfinder: **Ebert, Wolfgang, Dr.**
**Doerperhofstrasse 31**
**D-4150 Krefeld(DE)**
Erfinder: **Meyer, Rolf-Volker, Dr.**
**Buchheimer Strasse 23**
**D-4150 Krefeld(DE)**
Erfinder: **Kreuder, Hans-Joachim, Dr.**
**Doerperhofstrasse 35**
**D-4150 Krefeld(DE)**

(54) **Verfahren zur Herstellung von Polyestern und ihre Verwendung als Bindemittel oder Bindemittelkomponente in Pulverlacken.**

(57) Ein Verfahren zur Herstellung von Hydroxyl- und/oder Carboxylgruppen aufweisenden Polyestern durch Umsetzung von

a) einer Säurekomponente, bestehend aus mindestens einer mehrbasischen organischen Carbonsäure, mindestens einem zur Esterbildung befähigten Derivat einer solchen Säure, mindestens einer organischen Hydroxycarbonsäure und/oder mindestens einem Lacton einer organischen Hydroxycarbonsäure
mit

b) einer Polyolkomponente, bestehend aus mindestens einem mehrwertigen Alkohol des Molekulargewichtsbereichs 62 bis 250,
wobei man die Umsetzung in Gegenwart von

c) mindestens 5 Gew.-%, bezogen auf das Gewicht der Komponenten a) und b) eines Amid- und/oder Lactam gruppen aufweisenden Lösungsmittels, welches keine N-H-Bindungen aufweist, durchführt, und die Verwendung der Polyester als Bindemittel der als Bindemittelkomponente in Pulverlacken.

EP 0 318 798 A2

## Verfahren zur Herstellung von Polyestern und ihre Verwendung als Bindemittel oder Bindemittelkomponente in Pulverlacken

Die Erfindung betrifft ein neues Verfahren zur Herstellung von Carboxyl- und/oder Hydroxylgruppen aufweisenden, als Bindemittel oder als Bindemittelkomponente in Pulverlacken geeigneten Polyestern und die Verwendung der so erhaltenen Polyester als Bindemittel oder als Bindemittelkomponente in Pulverlacken.

Hydroxyl- und/oder Carboxylgruppen aufweisende Polyester sind bekannt und können nach den unterschiedlichsten Verfahren hergestellt werden. So können z.B. durch Eigenkatalyse aus Dicarbonsäuren und Diolen Polyester erhalten werden. Jedoch ist dieses Verfahren bei aromatischen Dicarbonsäuren, die zur Herstellung von Polyestern für Pulverlacke vorzugsweise eingesetzt werden, sehr langwierig, so daß Reaktionszeiten von ≥50 h bis zur Einstellung einer definierten, niedrigen Endgruppenkonzentration keine Seltenheit sind.

Die Verwendung von freien Säuren als Katalysatoren ist in diesen Fällen nicht möglich, da bei einer späteren Verwendung als Bindemittel die Säure stört, andererseits die Abtrennung bei der Aufarbeitung nicht möglich ist. Man behilft sich normalerweise dadurch, daß man statt der freien Säuren deren Methylester und einen Umesterungskatalysator einsetzt und Methanol aus dem Reaktionsgemisch abdestilliert. Die zur Umesterung verwendeten Katalysatoren müssen jedoch oft während der Reaktion inaktiviert und durch Kondensationskatalysatoren ersetzt werden, da andernfalls der Molekulargewichtsaufbau ungenügend ist. Als Katalysatoren für diese Zwecke werden meist lösliche Verbindungen von Zn, Cd, Mn, Ti, Sn und Sb verwendet.

Nachteilig an diesem Verfahren ist neben der ungenügenden Beschleunigung der Reaktion die oft auftretende Verfärbung und der nicht mehr aus dem Reaktionsprodukt zu entfernende Katalysator.

Es war daher die der Erfindung zugrundeliegende Aufgabe ein neues Verfahren zur Herstellung von Polyestern, die als Bindemittel oder als Bindemittelkomponente für Pulverlacke geeignet sind, zur Verfügung zu stellen, welches kürzere Reaktionszeiten und damit eine rationellere Herstellung der Polyester erlaubt.

Überraschenderweise wurde jetzt gefunden, daß diese Aufgabe durch die Verwendung von Amidgruppen aufweisenden, von N-H-Bindungen freien Lösungsmitteln als Reaktionsmedium gelingt.

Gegenstand der Erfindung ist ein Verfahren zur Herstellung von Hydroxyl- und/oder Carboxylgruppen aufweisenden Polyestern mit einer Säurezahl von bis zu 50 und einer Hydroxylzahl von bis zu 200, wobei die Summe aus Hydroxylzahl und Säurezahl bei 20 bis 200 liegt, durch Umsetzung von

a) einer Säurekomponente, bestehend aus a1) mindestens einer mehrbasischen organischen Carbonsäure und/oder a2) mindestens einem zur Esterbildung befähigten Derivat einer mehrbasischen organischen Carbonsäure und/oder a3) mindestens einer organischen Hydroxycarbonsäure und/oder a4) mindestens einem Lacton einer organischen Hydroxycarbonsäure, mit der Maßgabe, daß die Komponente a) zumindest zu 50 Mol-% aus aromatischen Einzelkomponenten a1), a2), a3) und/oder a4) besteht,

mit

b) einer Polyolkomponente, bestehend aus mindestens einem mehrwertigen Alkohol des Molekulargewichtsbereichs 62 bis 250,

gegebenenfalls unter Mitverwendung von Hilfs- und Zusatzmitteln, unter Einhaltung eines Äquivalentverhältnisses von Carboxylgruppen unter Einbeziehung der gegebenenfalls in der Komponente a) vorliegenden potentiellen Carboxylgruppen zu Hydroxylgruppen unter Einbeziehung der gegebenenfalls in der Komponente b) und den Zusatzmitteln vorliegenden potentiellen Hydroxylgruppen von 0,65:1 bis 1,15:1, mit der Maßgabe, daß die Komponente b) in einer Menge von mindestens 30 Gew.-%, bezogen auf das Gewicht der Komponente a), eingesetzt wird, dadurch gekennzeichnet, daß man die Umsetzung in Gegenwart von

c) mindestens 5 Gew.-%, bezogen auf das Gewicht der Komponenten a) und b) eines Amid- und/oder Lactamgruppen aufweisenden Lösungsmittels, welches keine N-H-Bindungen aufweist, durchführt.

Gegenstand der Erfindung ist auch die Verwendung der nach diesem Verfahren erhaltenen Polyester als Bindemittel oder als Bindemittelkomponente in Pulverlacken.

Bei der beim erfindungsgemäßen Verfahren einzusetzenden Säurekomponente a) handelt es sich um mindestens eine Verbindung, ausgewählt aus der Gruppe bestehend aus den Verbindung a1), a2), a3) und a4), wobei jedoch mindestens 50 Mol-% der Komponente a) aus aromatischen Verbindungen a1), a2), a3) oder a4) bestehen müssen.

Als Verbindungen a1) kommen beliebige mehrbasische Carbonsäuren in Betracht, die, von den

Carboxylgruppen abgesehen, bezüglich der Veresterungsreaktion inert sind. Diese mehrbasischen Carbonsäuren weisen im allgemeinen ein Molekulargewicht von 118 bis 564, vorzugsweise 118 bis 166 auf. Geeignet sind beispielsweise Terephthalsäure, Isophthalsäure, Phthalsäure, 1,2-Naphthalindicarbonsäure, Naphthalin-1,4-dicarbonsäure, 1,5-Naphthalindicarbonsäure, 1,8-Naphthalindicarbonsäure, 5-Methylisophthalsäure, Tetrahydrophthalsäure, 1,2-, 1,3-, 1,4-Cyclohexan-dicarbonsäure, Bernsteinsäure, Dimethylmalonsäure, Glutarsäure, Methylbernsteinsäure, Adipinsäure, Dimethylbernsteinsäure, Pimelinsäure, Korksäure, Hexahydroendomethylen-tetrahydrophthalsäure, Azelainsäure, Sebazinsäure, Decandicarbonsäure, Dimerfettsäure oder 1,2-Hydroxystearinsäure. Beliebige Gemische derartiger Säuren können ebenfalls verwendet werden. Bevorzugte mehrbasische Carbonsäuren a1) sind Terephthalsäure, Isophthalsäure, Phthalsäure, Tetrahydrophthalsäure, Hexahydrophthalsäure, Bernsteinsäure, Adipinsäure oder deren Gemische.

Zu den esterbildenden Carbonsäurederivaten a2) gehören insbesondere niedere Alkylester von mehrbasischen Säuren der unter a1) beispielshaft genannten Art oder deren intramolekulare Säureanhydride. Beispiele hierfür sind Phthalsäureanhydrid, Tetrahydrophthalsäureanhydrid, Hexahydrophthalsäureanhydrid, Bernsteinsäureanhydrid, Trimellithsäureanhydrid oder Terephthalsäure-dimethylester.

Zu den Aufbaukomponenten a3) gehören Hydroxycarbonsäuren des Molekulargewichtsbereichs 76 bis 300, vorzugsweise 90 bis 138 wie beispielsweise Hydroxyessigsäure, 4-Hydroxybuttersäure, Hydroxypivalinsäure, 12-Hydroxystearinsäure oder p-Hydroxybenzoesäure.

Zu den Aufbaukomponenten a4) gehören Lactone von Hydroxycarbonsäuren der unter a3) beispielhaft genannten Art wie beispielsweise ε-Caprolacton oder Butyrolacton.

Die Komponente a) besteht vorzugsweise zumindest zu 50 Gew.-% aus Terephthalsäure oder einem esterbildenden Derivat dieser Säure, insbesondere Terephthalsäuredimethylester.

Als Komponente b) eignen sich beliebige mehrwertige Alkohole des Molekulargewichtsbereichs 62 bis 250 wie beispielsweise Ethylenglykol, 1,2-Propandiol, 1,3-Propandiol, 2,2-Dimethyl-1,3-propandiol, 1,2-Butandiol, 1,3-Butandiol, 2,3-Butandiol, 1,4-Butandiol, 1,5-Pentandiol, 1,6-Hexandiol, 2,2-Dimethyl-4,4-dimethylcyclobutandiol, 1,2-Cyclopentandiol, 1,3-Cyclopentandiol, 1,2-Cyclohexandiol, 1,3-Cyclohexandiol, 1,4-Cyclohexandiol, 1,4-Dimethylolcyclohexan, Hexan-2,5-diol, 2,2-Bis-(4-hydroxycyclohexyl)-propan, Diethylenglykol, Triethylenglykol, Dipropylenglykol, 2,2,4-Trimethylpentandiol-1,3, 2-Methylpentandiol-2,4, 2-Ethylhexandiol-1,3, Glycerin, Hexantriole, Pentaerythrit, Sorbit, Trimethylolethan, Trimethylolpropan oder Gemische derartiger mehrwertiger Alkohole.

Falls eine gewisse Verzweigung der erfindungsgemäßen Verfahrensprodukte erwünscht ist, kann dies durch Mitverwendung von höher als difunktionellen Ausgangskomponenten a) und/oder b) oder auch von Polyepoxidverbindungen wie beispielsweise dem Diglycidylether von Bisphenol A als Zusatzmittel erreicht werden.

Bei der Durchführung des erfindungsgemäßen Verfahrens werden im übrigen Art und Mengenverhältnisse der Komponenten a) und b) so gewählt, daß die resultierenden Polyester eine Säurezahl von 2 bis 50 und eine Hydroxylzahl von 5 bis 200 aufweisen, wobei die Summe aus Säurezahl und Hydroxylzahl bei 20 bis 200 liegt. Vorzugsweise werden Art und Mengenverhältnisse der Ausgangsmaterialien so gewählt, daß eine Säurezahl von 0 bis 50 une eine Hydroxylzahl von maximal 20 bzw. eine Hydroxylzahl von 0 bis 50 und eine Säurezahl von maximal 20 resultiert, wobei in allen Fällen die Summe aus Hydroxylzahl und Säurezahl innerhalb der genannten Grenze liegt. Die Mengenverhältnisse der Ausgangskomponenten a) und b) entsprechen im übrigen einem Äquivalentverhältnis von Carboxylgruppen unter Einbeziehung der gegebenenfalls vorliegenden potentiellen Carboxylgruppen zu Hydroxylgruppen unter Einbeziehung der gegebenenfalls vorliegenden potentiellen Hydroxylgruppen von 0,65:1 bis 1,15:1, wobei jedoch in jedem Fall die Komponente b) in einer Menge von mindestens 30 Gew.-%, bezogen auf das Gewicht der Komponente a) zum Einsatz gelangt.

Unter "potentiellen Carboxylgruppen" sind in obigem Zusammenhang insbesondere Säureanhydridgruppen (eine Anhydridgruppe = zwei potentielle Carboxylgruppen), Estergruppen (eine Methylester-Gruppe = eine potentielle Carboxylgruppe) und Lactongruppen (eine Lactongruppe = eine potentielle Carboxylgruppe) zu verstehen. Unter "potentiellen Hydroxylgruppen" sind insbesondere Lactongruppen (eine Lactongruppe = eine potentielle Hydroxylgruppe) zu verstehen. Im Falle der bereits oben ange sprochenen, aber weniger bevorzugten Mitverwendung von Polyepoxiden als vernetzend wirkende Zusatzmittel, müßten die Epoxidgruppen ebenfalls als potentielle Hydroxylgruppen angesehen werden (1 Epoxidgruppe = 2 potentielle Hydroxylgruppen) und in die Berechnung des Äquivalentverhältnisses von Carboxyl- zu Hydroxylgruppen einbezogen werden.

Erfindungswesentlicher Punkt ist nun, daß die Veresterungsreaktion in Gegenwart von Amidgruppen und/oder Lactamgruppen aufweisenden Lösungsmitteln, welche jedoch keine N-H-Bindung aufweisen, durchgeführt wird. Diese Lösungsmittel werden bei der Durchführung des erfindungsgemäßen Verfahrens in einer Menge von mindestens 5 Gew.-%, im allgemeinen von 5 bis 900 Gew.-% und vorzugsweise von 10

bis 300 Gew.-%, jeweils bezogen auf das Gewicht der Komponenten a) und b), eingesetzt.

Geeignete Lösungsmittel sind beliebige N-substituierte Lactame des Molekulargewichtsbereichs 85 bis 449, vorzugsweise 85 bis 169 und beliebige N,N-disubstituierte Carbonsäureamide des Molekulargewichtsbereichs 87 bis 311, vorzugsweise 87 bis 205, die gegenüber den Reaktionspartnern inert und unter den Reaktionsbedingungen flüssig sind, d.h., für die Reaktionspartner ein Lösungsmittel darstellen.

Typische Beispiele derartiger Lösungsmittel sind N-Methyl-2-pyrrolidon, N-Ethyl-2-pyrrolidon, N-n-Propyl-2-pyrrolidon, N-i-Propyl-2-pyrrolidon, N-Butyl-2-pyrrolidon, N-i-Butyl-2-pyrrolidon, N-Cyclopentyl-2-pyrrolidon, N-Cyclohexyl-2-pyrrolidon, N-Benzyl-2-pyrrolidon, N-Stearyl-2-pyrrolidon, N-Methylcaprolactam, N-Ethylcaprolactam, N-n-Propylcaprolactam, N-i-Butylcaprolactam, N-Stearylcaprolactam, N-Cyclopentylcaprolactam, N-Cyclohexyl-caprolactam, N-Benzyl-caprolactam, N-Methyllaurinlactam, N-Ethyllaurinlactam, N-n-Propyllaurinlactam, N-i-Propyllaurinlactam, N-n-Butyllaurinlactam, N-i-Butyllaurinlactam, N-Stearyllaurinlactam, N-Cyclopentyllaurinlactam, N-Cyclohexyllaurinlactam, N-Benzyllaurinlactam, N-Methyl-2-piperidon, N-Ethyl-2-piperidon, N-Isopropyl-2-piperidon, N-n-Butyl-2-piperidon, N-i-Butyl-2-piperidon, N,N-Dimethylacetamid, N,N-Diethylacetamid, N,N-Dipropylacetamid, N,N-Dimethylbenzoesäureamid, N,N-Diethylbenzoesäureamid, N,N-Di-n-propylbenzoesäureamid, N,N-Di-i-propylbenzoesäureamid, N,N-Dimethylstearinsäureamid.

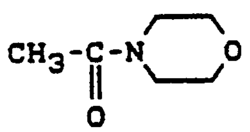 , 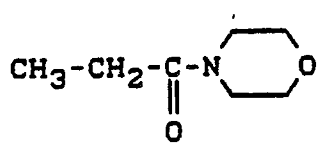 , 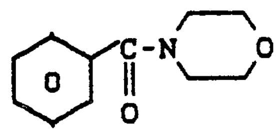 ,

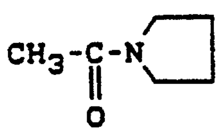 , 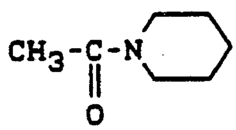 , 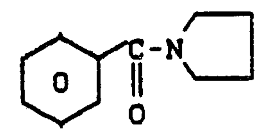 ,

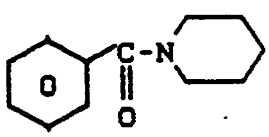 , 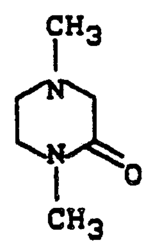 , 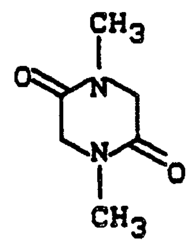 ,

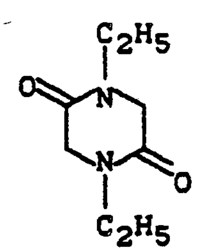 , 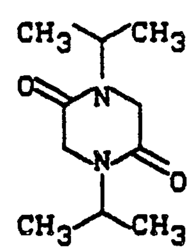 .

Bevorzugte Lösungsmittel sind:

2-Methyl-2-pyrrolidon, N-Ethyl-2-pyrrolidon, N-i-Propyl-2-pyrrolidon, N-Cyclopentyl-2-pyrrolidon, N-Cyclohexyl-2-pyrrolidon, N-Methylcaprolactam, N-Ethylcaprolactam, N-i-Propylcaprolactam, N-Butylcaprolactam, N-Cyclohexylcaprolactam, N-Stearylcaprolactam, N-Methyllaurinlactam, N-Methylpiperidon, N-Ethylpiperidon, N-Butylpiperidon, N,N-Dimethylbenzoesäureamid, N,N-Diethylbenzoesäureamid, N,N-Diisopropylbenzoesäureamid,

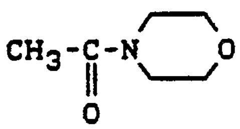 , 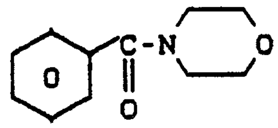 , 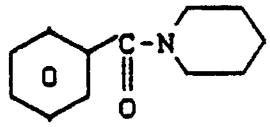 ,

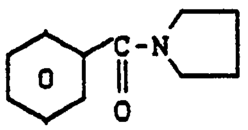 .

Besonders bevorzugte Lösungsmittel im Sinne der Erfindung sind:
N-Cyclohexyl-2-pyrrolidon, N-Methylcaprolactam, N-Ethylcaprolactam, N-i-Propylcaprolactam, N-Butylcaprolactam, N,N-Dimethylbenzoesäureamid, N,N-Diethylbenzoesäureamid, N,N-Diisopropylbenzoesäureamid.

Obwohl es einer der Vorteile des erfindungsgemäßen Verfahrens ist, daß auch ohne Mitverwendung von Katalysatoren stark erhöhte Reaktionsgeschwindigkeiten erreicht werden, ist die Mitverwendung der an sich bekannten Veresterungskatalysatoren nicht ausgeschlossen. Man wird die Mitverwendung von Katalysatoren insbesondere dann in Betracht ziehen, wenn bei der späteren Verwendung der Verfahrensprodukte eine katalytische Beschleunigung der Vernetzungsreaktion erwünscht ist. Die Katalysatoren würden daher weniger zur Beschleunigung der während des erfindungsgemäßen Verfahrens ablaufenden Reaktion als vielmehr im Hinblick auf die später katalytisch beschleunigte Vernetzungsreaktion mitverwendet. Selbstverständlich können diese Katalysatoren den Verfahrensprodukten auch erst nach ihrer Herstellung einverleibt werden. Geeignete Katalysatoren sind insbesondere solche auf Basis von Schwermetallen wie beispielsweise Titan, Zinn oder Antimon wie beispielsweise Titansäuretetraalkylester mit Alkylresten mit 3 bis 10 Kohlenstoffatomen wie z.B. Tetraisopropyltitanat, Tetrabutyltitanat, Tetraoctyltitanat, Tetradecyltitanat, organische Zinnverbindungen wie Dibutylzinnoxid, Butylhydroxyzinnoxid, Didodecylzinnoxid bzw. Antimonoxide.

Das erfindungsgemäße Verfahren, d.h. die Polykondensationsreaktion wird im allgemeinen innerhalb des Temperaturbereichs von 120 bis 280 °C, vorzugsweise 140 bis 270 °C unter Abdestillieren des entstehenden Kondensationswassers durchgeführt, wobei allerdings darauf geachtet werden muß, daß nicht durch "Mitschleppen" von organischen Ausgangsmaterialien die Stöchiometrie gestört wird. Nach Beendigung der Wasserabspaltung wird im allgemeinen das Reaktionsgemisch kurzzeitig auf Rückflußtemperatur erhitzt und anschließend das Lösungsmittel, gegebenenfalls im Vakuum, destillativ entfernt. Andere Aufarbeitungsmöglichkeiten bestehen beispielsweise in der Fällung des Reaktionsgemisches, z.B. in Wasser oder in einer Aufarbeitung des Reaktionsgemischs in Extrudern mit Entgasungszonen.

Die erfindungsgemäßen Verfahrensprodukte weisen im allgemeinen einen Schmelzpunkt bzw. -bereich innerhalb des Temperaturbereichs von 45 bis 80 °C, vorzugsweise 50 bis 70 °C auf. Diese Eigenschaft der erfindungsgemäßen Verfahrensprodukte kann durch geeignete Wahl der Art und Mengenverhältnisse der beispielhaft genannten Ausgangsmaterialien a) und b) in einfachen Vorversuchen ermittelt werden.

Die erfindungsgemäßen Verfahrensprodukte eignen sich in Kombination mit den üblichen Härtern zur Herstellung von hochwertigen Pulverlacken.

Geeignete Härter für Hydroxylpolyester sind beispielsweise blockierte Polyisocyanate wie das Teil-Trimerisat von 1-Isocyanato-3,3,5-trimethyl-5-isocyanatomethylcyclohexan (IPDI) in ε-Caprolactam-blockierter Form oder durch Umsetzung mit unterschüssigen Mengen an mehrwertigen Alkoholen urethanisiertes IPDI in ε-Caprolactamblockierter Form oder ε-Caprolactam-verkappte Addukte von IPDI an Glykole wie Ethylenglykol oder Diethylenglykol. Geeignete Härter für Carboxylgruppen aufweisende Polyester sind insbesondere Polyepoxide. So wird beispielsweise für wetterbeständige Beschichtungen N,N′,N″-Triglycidyl-isocyanurat und für nicht wetterbeständige Beschichtungen der Diglycidyl-ether des Bisphenols A verwendet. Als Härter für Hydroxylgruppen aufweisende Polyester eignen sich im übrigen auch irreversibel blockierte Polyuretdione auf Basis von IPDI.

Den Pulverlacken können die üblichen Hilfs- und Zusatzmittel wie beispielsweise Pigmente, Verlaufmittel, Katalysatoren u.dgl. einverleibt werden. Die Pulverlacke eignen sich zur Beschichtung beliebiger Hitzeresistenter Substrate, insbesondere von Metallen nach dem Wirbelsinter- oder elektrostatischen Pulversprühverfahren.

Die nachfolgenden Beispiele dienen der weiteren Erläuterung der Erfindung, ohne diese einzuschränken.

Vergleichsbeispiel 1

In einem 2 1-Rundkolben mit Rührer, Thermometer, Stickstoffanschluß, kurzer Kolonne und Destillationsbrücke werden 433,30 g (4,166 Mol) 2,2-Dimethylpropan-1,3-diol, 600,2 g (3,616 Mol) Terephthalsäure, 95,1 g (0,573 g) Isophthalsäure und 28,2 g (0,1468 Mol) Trimellithsäureanhydrid vorgelegt und auf 190 °C erhitzt. Die Temperatur wird nun so gesteuert, daß langsam aber stetig Wasser abdestilliert wird. Nach 56 h ist der Ansatz im Sumpf klar. Man läßt 2 h bei 265 °C nachrühren. Der erhaltene Polyester weist eine Hydroxylzahl (OHZ) von 2,5 und eine Säurezahl (SZ) von 35 auf.

Beispiel 1

Setzt man dem Ansatz des Vergleichsversuches 500 ml N-Methylcaprolactam zu, so ist der Ansatz nach 8 h, bei Sumpftemperatur zwischen 191-222 °C, klar. Es wird 1 h bei 222 °C nachgerührt und anschließend bei reduziertem Druck (Wasserstrahlvakuum) das N-Methylcaprolactam abdestilliert. Nach einer Nachkondensation von 2 h bei 240 bis 270 °C erhält man einen Polyester mit folgenden Kennzahlen:
OHZ = 2, SZ = 38.

Beispiel 2

Beispiel 1 wird wiederholt, jedoch unter Verwendung von lediglich 250 ml N-Methylcaprolactam. Nach 19 h liegt ein klarer Polyesteransatz vor, der in Analogie zu Beispiel 2 nachgerührt, andestilliert und nachkondensiert wird:
OHZ = 2,5, SZ = 35.

Beispiel 3

433,3 g (4,166 Mol) 2,2-Dimethyl-1,3-propandiol, 695,4 g (4,189 Mol) Terephthalsäure und 28,2 g (0,147 Mol) Trimellithsäureanhydrid werden in 500 ml N-Methylcaprolactam auf 200 °C so erhitzt, daß Wasser aber kein Lösungsmittel abdestillierte. Der Ansatz ist nach 14 h klar, die Temperatur steigt in dieser Zeit auf 231 °C. Es wird 1 h bei 231 °C nachgerührt; das N-Methylcaprolactam unter vermindertem Druck entfernt und 2,5 h nachkondensiert bei 246 °C.
OHZ = 4,5, SZ = 35.

Beispiel 4

686,4 g (4,135 Mol) Terephthalsäure, 102,7 g (0,618 Mol) Isophthalsäure, 222,9 g (2,143 Mol) 2,2-Dimethyl-1,3-propandiol, 132,9 g (2,144 Mol) Ethylenglykol, 22,9 g (0,2489 Mol) Glycerin werden in 500 ml N-Methylcaprolactam bei 225 °C kondensiert. Der Ansatz ist nach 6,5 h klar und wird, wie in Beispiel 4 beschrieben, nachgerührt, andestilliert und nachkondensiert.
OHZ = 11, SZ = 38.

Vergleichsbeispiel 2

Beispiel 4 wird ohne Mitverwendung von N-Methylcaprolactam wiederholt. Der Ansatz wird erst nach 42 h klar.
OHZ = 10, SZ = 38.

Beispiel 5

39,7 g (0,296 Mol) Trimethylolpropan, 319,4 g (3,067 Mol) 2,2-Dimethyl-1,3-propandiol, 47 g (0,398 Mol) Hexan-1,6-diol, 593,9 g (3,575 Mol) Terephthalsäure werden in 500 ml N-Methylcaprolactam kondensiert. Nach 5 h, in dem die Temperatur von 196 °C auf 228 °C im Sumpf ansteigt, ist der Ansatz klar. Es wird 2 h

bei 228° C nachgerührt, das N-Methylcaprolactam im Vakuum abdestilliert und 4 h bei 240° C nachkondensiert.
OHZ = 40, SZ = 9.

Vergleichsbeispiel 3

Beispiel 5 wird ohne N-Methylcaprolactam wiederholt. Nach einer Reaktionszeit von 42 h liegt ein Polyester mit einer Hydroxylzahl von 50 und einer Säurezahl von 10 vor.

Verwendungsbeispiele

Allgemeine Herstellung eines Pulverlackes

Die im Vergleichsbeispiel 4 bzw. im Beispiel 6 (erfindungsgemäße Verwendung) eingesetzten Carboxylpolyester werden mit dem nachstehend genannten Härter und den nachstehend genannten Zusatzmitteln trocken gemischt.

Diese Mischungen werden dann auf einem Laborextruder bei Temperaturen von 80 bis 120° C in der Schmelze homogenisiert. Nach Abkühlen und vor Zerkleinerung der Extrudate werden diese auf einer Gebläsemühle auf eine durchschnittliche Korngröße von 50 µm zu einem Pulverlack gemahlen. Nach Absieben des vorhandenen Grobkornanteils von Teilchengrößen oberhalb 90 µm werden die gebrauchsfertigen Pulverlacke auf doppelt dekapierte, entfettete Prüfbleche (Länge 16,5 cm, Breite 65 mm, Stärke 0,8 mm) mit einer elektrostatischen Sprühvorrichtung bei einer Negativspannung von ca. 60 kV aufgesprüht. Die Bleche werden anschließend bei verschiedenen Temperaturen eingebrannt.

Die im Vergleichsbeispiel 5 und Beispiel 7 eingesetzten Polyester werden mit dem nachstehend genannten Härter und den nachstehend genannten Zusatzmitteln zunächst trocken gemischt. Diese Mischungen werden anschließend mittels eines Laborextruders bei Temperaturen von 80-120° C in der Schmelze homogenisiert. Die Extrudate werden nach Abkühlung und Vorzerkleinerung auf einer Gebläsemühle auf eine durchschnittliche Korngröße von 50 µm zu einem Pulverlack gemahlen. Nach Absieben ses vorhandenen Grobkornanteils von Teilchengrößen oberhalb 90 µm werden die gebrauchsfertigen Pulverlakke auf doppelt dekapierte, entfettete Prüfbleche (Länge 16,5 cm, Breite 65 mm, Stärke 0,8 mm) mit einer elektrostatischen Sprühvorrichtung bei einer Negativspannung von ca. 60 kV aufgesprüht. Die Bleche werden anschließend bei verschiedenen Temperaturen eingebrannt.

Bestimmung der Eigenschaften der erhaltenen Beschichtungen

Die in nachstehender Tabelle angegebenen Eigenschaften der Beschichtungen wurden wie folgt bestimmt:

Glanzgrad:

Glanzgrad nach Gardner, DIN 67 530, 60° -Winkel

Acetonfestigkeit:

Hierzu werden 50 Doppelhübe mit einem in Aceton getränkten Wattebausch durchgeführt. Die Angabe "O" bedeutet, daß keinerlei Veränderung der Lackoberfläche feststellbar war.

Knickprobe:

Die 0,8 mm dicken, beschichteten Stahlbleche werden geknickt. Es darf hierbei kein Filmriß und kein Abplatzen zu beobachten sein. Die Angabe "O" bedeutet, daß der Test ohne Beanstandung bestanden

wurde.

Erichsen-Tiefung:

Langsame Verformung durch Kugeldruck von der Rückseite in mm gemäß DIN 53 156.

Weißgrad:

Bestimmung nach A. Berger.

Gelierzeit:

Nach DIN-Entwurf 55 990, Teil 8.

Vergleichsbeispiel 4

Zusammensetzung des Pulverlacks:

| | |
|---|---|
| 55,2 GT | Polyester gemäß Vergleichsbeispiel 1 |
| 4,2 GT | eines handelsüblichen Polyepoxid-Härters (®Araldit PT 810, Hersteller: Ciba-Geigy AG) |
| 0,6 GT | eines handelsüblichen Verlaufmittels (®Acronal 4 F, Hersteller: BASF AG) |
| 40 GT | Titandioxid-Pigment (Rutil). |

Beispiel 6 (erfindungsgemäße Verwendung)

Zusammensetzung des Pulverlacks:

Entsprechend Vergleichsbeispiel 4, jedoch unter Verwendung von 55,2 Gewichtsteilen des Polyesters gemäß Beispiel 1.

Vergleichsbeispiel 5

Zusammensetzung des Pulverlacks:

| | |
|---|---|
| 44,5 GT | des Polyesters gemäß Vergleichsbeispiel 3 |
| 14,9 GT | eines handelsüblichen Polyisocyanat-Härters auf Basis eines $\epsilon$-Caprolactamblockierten IPDI-Derivats (®Crelan UI, Hersteller: Bayer AG) |
| 0,6 GT | Verlaufmittel (wie in Vergleichsbeispiel 4) |
| 40 GT | Pigment (wie in Vergleichsbeispiel 4) |

Beispiel 7 (erfindungsgemäße Verwendung)

Zusammensetzung des Pulverlacks:

Entsprechend Vergleichsbeispiel 5, jedoch unter Verwendung von 44,5 GT des Polyesters gemäß Beispiel 5.

| | Vergleichsbeispiel 4 | Beispiel 6 | Vergleichsbeispiel 5 | Beispiel 7 |
|---|---|---|---|---|
| Einbrenn-T. (°C) | 200 | 200 | 200 | 200 |
| Einbrenn-t (min) | 10 | 10 | 10 | 10 |
| Daten | | | | |
| Schichtdicke (µ) | 55 | 57 | 53 | 56 |
| Glanzgrad | 88 | 92 | 84 | 87 |
| Aceton-Festigkeit | 0 | 0 | 0 | 0 |
| Knickprobe | 0 | 0 | 0 | 0 |
| Erichsen-Tiefung (mm) | 9 | 9 | 9 | 9 |
| Weißgrad (Anfang) | 84 | 89 | 80 | 83 |
| Weißgrad nach überbrennen | | | | |
| 15 min/200°C | 80 | 85 | 72 | 76 |
| 20 min/220°C | 74 | 80 | 68 | 71 |
| Gelierzeit (180°C) in sec | 420 | 410 | 450 | 446 |

Wie aus den Ergebnissen im Weißgrad nach dem Überbrennen hervorgeht, ist die Tendenz zum Vergilben bei den erfindungsgemäß in Lösung hergestellten Polyestern besser.

**Ansprüche**

1. Verfahren zur Herstellung von Hydroxyl- und/oder Carboxylgruppen aufweisenden Polyestern mit einer Säurezahl von bis zu 50 und einer Hydroxylzahl von bis zu 200, wobei die Summe aus Hydroxylzahl und Säurezahl bei 20 bis 200 liegt, durch Umsetzung von
a) einer Säurekomponente, bestehend aus a1) mindestens einer mehrbasischen organischen Carbonsäure und/oder a2) mindestens einem zur Esterbildung befähigten Derivat einer mehrbasischen organischen Carbonsäure und/oder a3) mindestens einer organischen Hydroxycarbonsäure und/oder a4) mindestens einem Lacton einer organischen Hydroxycarbonsäure, mit der Maßgabe, daß die Komponente a) zumindest zu 50 Mol-% aus aromatischen Einzelkomponenten a1), a2), a3) und/oder a4) besteht,
mit
b) einer Polyolkomponente, bestehend aus mindestens einem mehrwertigen Alkohol des Molekulargewichtsbereichs 62 bis 250 ,
gegebenenfalls unter Mitverwendung von Hilfs- und Zusatzmitteln, unter Einhaltung eines Äquivalentverhältnisses von Carboxylgruppen unter Einbeziehung der gegebenenfalls in der Komponente a) vorliegenden potentiellen Carboxylgruppen zu Hydroxylgruppen unter Einbeziehung der gegebenenfalls in der Komponente b) und den Zusatzmitteln vorliegenden potentiellen Hydroxylgruppen von 0,65:1 bis 1,5:1, mit der Maßgabe, daß die Komponente b) in einer Menge von mindestens 30 Gew.-%, bezogen auf das Gewicht der Komponente a), eingesetzt wird, dadurch gekennzeichnet, daß man die Umsetzung in Gegenwart von
c) mindestens 5 Gew.-%, bezogen auf das Gewicht der Komponenten a) und b) eines Amid- und/oder Lactamgruppen aufweisenden Lösungsmittels, welches keine N-H-Bindungen aufweist, durchführt.

2. Verfahren gemäß Anspruch 1, dadurch gekennzeichnet, daß die Komponente a) zumindest zu 50 Gew.-% aus Terephthalsäure besteht.

3. Verfahren gemäß Anspruch 1 und 2, dadurch gekennzeichnet, daß man als Lösungsmittel c) N-Methylcaprolactam verwendet.

4. Verfahren gemäß Anspruch 1 bis 3, dadurch gekennzeichnet, daß man Art und Mengenverhältnisse der Ausgangskomponenten a) und b) so wählt, daß der resultierende Polyester eine Säurezahl von 0 bis 50 und eine Hydroxylzahl von maximal 20 aufweist.

5. Verfahren gemäß Anspruch 1 bis 3, dadurch gekennzeichnet, daß man Art und Mengenverhältnisse der Komponenten a) und b) so wählt, daß der resultierende Polyester eine Säurezahl von maximal 15 und eine Hydroxylzahl von 0 bis 50 aufweist.

6. Verfahren gemäß Anspruch 1 bis 5, dadurch gekennzeichnet, daß man die Veresterungsreaktion in Gegenwart von Hilfs- und Zusatzmitteln, ausgewählt aus der Gruppe bestehend aus Katalysatoren und verzweigend wirkenden Polyhydroxylverbindungen durchführt.

7. Verwendung der gemäß Anspruch 1 bis 6 erhaltenen Polyester als Bindemittel oder als Bindemittelkomponente in Pulverlacken.